# EUROPÄISCHE PATENTSCHRIFT

(11) **EP 0 534 932 B1**
(45) Veröffentlichungstag und Bekanntmachung des Hinweises auf die Patenterteilung: **17.04.1996**
(21) Anmeldenummer: 92890201.4
(22) Anmeldetag: 23.09.1992
(51) Int. Cl.: B61D 17/20, B61D 19/02

(54) **Durchgang eines Waggons des schienengebundenen Personenverkehrs**
Passage of a wagon of track-bound passager transport
Passage d'un wagon de transport de personnes roulant sur rails

(30) Priorität: 25.09.1991 AT 1933/91
(43) Veröffentlichungstag der Anmeldung: 31.03.1993
(73) Patentinhaber: WIENER METALLWERK GMBH, A-2100 Korneuburg/Leobendorf (AT)
(72) Erfinder: Gemeinböck, Gerhard, A-1220 Wien (AT); Niewiadomski,Jan, Dipl.-Ing., A-1050 Wien (AT); Langenreiter, Franz, A-3485 Haitzendorf (AT)
(74) Vertreter: Widtmann, Georg, Dipl.-Ing. Dr. techn.

(56) Entgegenhaltungen:
- EP-A- 0 058 988
- DE-A- 1 811 440
- DE-A- 3 502 032
- FR-A- 2 656 271

## Beschreibung

Die Erfindung betrifft einen Durchgang eines Waggons des schienengebundenen Personenverkehrs mit zumindest einer, insbesondere zwei, Schiebetüren.

Der schienengebundene Personenverkehr stellt eine der sichersten Transportarten für Menschen dar. Diese Aussage gilt sowohl für den Personennah- als auch Personenfernverkehr. Im Personenfernverkehr kommen immer höhere Geschwindigkeiten zum Einsatz, um die Konkurrenzfähigkeit gegenüber anderen Transportmitteln zu erhöhen. Daneben wird sowohl im Fern- als auch im Nahverkehr der Komfort innerhalb der Waggons wesentlich erhöht, wodurch zwangsweise immer mehr brennbare Substanzen, wie Schaumstoffe, textile Sitzmöbelbespannungen und Bodenbespannungen, aber auch Dekorplatten, die beispielsweise mit Melaminen aufgebaut sind, zum Einsatz kommen. Dadurch wird die Brandgefahr fast zwangsweise mit erhöhtem Komfort vergrößert. Bei einem Waggonbrand eines Zuges kann in bestimmten Situationen der Zug nicht angehalten werden, um die Personen aussteigen zu lassen, sondern es muß bis zu einem geeigneten Ort weitergefahren werden. Diese Aussage gilt insbesondere dann, wenn Züge vorliegen, die z. B. in unterirdischen Strecken, aber auch Tunneln u. dgl. fahren. Durch das Verweilen der brennenden Waggons im Tunnel oder in im wesentlichen abgeschlossenen Räumen ist ein Löschen des Brandes sowie Retten der gefährdeten Personen nur schwer möglich ist.

Aus oben angeführten Gründen besteht somit das erhöhte Bedürfnis, Brandherde, abgeschlossen von anderen

Waggonteilen bzw. Waggons zu halten. Die Türen eines Waggons für den schienengebundenen Verkehr können nicht so wie stationäre Brandschutztüren aufgebaut werden, da einerseits ein zu hohes Gewicht vorliegt, und andererseits Durchgänge von Eisenbahnwaggons, insbesondere bei Nahverkehrszügen, möglichst große Durchtrittsöffnungen aufweisen müssen, um ein rechtzeitiges gegenseitiges Ausweichen der Passagiere zu ermöglichen, und gleichzeitig keine Gefährdung von Personen durch schwingende Türen od. dgl. zu verursachen.

Weiters muß der Durchgang so ausbildbar sein, daß er Druck- und Sogbeanspruchungen von 6.000 Pa standhält und die Bewegung der Türen quer zur Öffen- und Schließrichtung, z. B. durch Haken und Aufnahmen auf Türen und Durchführungen, in Geschlossenstellung verhinderbar ist.

Die DE-A-18 11 440 hat eine Doppelschiebetüre für Eisenbahnwagen od. dgl. zum Gegenstand, die aus Holz, Kunststoff, faserverstärktem Kunststoff, Schichtstoffen oder Metall bestehen kann. Die Schiebetüre weist weiters in ihrem einen Endbereich in Geschlossenstellung keine Durchführung auf.

Der FR-A-2 656 771 ist ein Waggon des schienengebundenen Personenverkehrs zu entnehmen, wobei ein Kraftfahrzeug in einem schienengebundenen Wagen derart untergebracht werden soll, daß der Durchgang für Personen vom und zum Kraftfahrzeug, das in diesem Wagen untergebracht werden soll, feuersicher gestaltet werden soll und daß bei derartigen zusätzlichen Türen, welche als Schwenktüren ausgebildet sind, Dichtstreifen vorgesehen werden können, die bei Hitzeeinwirkung expandieren.

Aus der DE-A-35 02 032 wird eine Schiebetüre oder ein Tor bekannt, die oder das offensichtlich für ein Bauwerk vorgesehen ist. Bei diesem Tor sind auch unter Wärmeeinwirkung expandierende Dichtungen vorgesehen. Dieser Offenlegungsschrift ist somit zu entnehmen, daß bei Konstruktionen, welche einen entsprechenden Raumbedarf aufweisen können, expandierbare Dichtungen anzuordnen sind.

Die EP-A-0 058 988 hat zum Gegenstand, eine Türe von einem Zimmer derartig auszubilden, daß sie einerseits den feuerpolizeilichen Vorschriften genügt und andererseits eine Glasscheibe ermöglicht (vgl. Seite 1, Zeilen 5 bis 7). Die Türe selbst besteht aus Holz, wobei zwischen dem Rahmen der Türe und der Scheibe aus Glas ein Stoff angeordnet ist, der sich bei erhöhter Temperatur expandiert.

Die vorliegende Erfindung hat sich zum Ziel gesetzt, einen Durchgang für Waggons des schienengebundenen Verkehrs zu schaffen, der es einerseits ermöglicht, einen besonders breiten und die Personen nicht behindernden Durchgang vorzusehen, welcher auch große Glasscheiben aufweisen kann.

Weiters hat sich die Erfindung zum Ziel gesetzt, einen derartigen Durchgang zu schaffen, der die Ausbreitung von Feuer von einem Waggon zu einem anderen bzw. von einem Waggonabschnitt in einen anderen Waggonabschnitt verhindert bzw. möglichst lange verzögert, und wobei weiters eine mit geringem Kraftaufwand zu betätigende Konstruktion vorliegt.

Der erfindungsgemäße Durchgang eines Waggons des schienengebundenen Personenverkehrs mit zumindest einer, insbesondere zwei, Schiebetüren, welche über obere und untere Schienen querverschieblich von einer Offen- in eine Geschlossenstellung, gegebenenfalls mit einer Steuerung, bewegbar ist(sind), wobei die Schiebetüre(n) mit einem Metallkörper, z. B. aus Profilen, aufgebaut sind, wobei gegebenenfalls zumindest eine anorganische Glasscheibe, z. B. Verbundglasscheibe, über eine elastische Dichtung in einer U-förmigen Aufnahme gehalten ist(sind) und der Metallkörper in Geschlossenstellung der Schiebetüre an seinem einen Endbereich in einer Durchführung und am anderen Endbereich an einer Aufnahme und in seinem oberen Stirnbereich zwischen beidseitig derselben vorgesehenen Querschienen angeordnet ist, besteht im wesentlichen darin, daß die Durchführung und die sich an beiden Seiten der Schiebetür befindlichen Querschienen an ihren zu dem Metallkörper weisenden Flächen sich entlang des Metallkörpers erstreckende, bei Hitzeeinwirkung sich expandierende, hitzebeständige Dichtungen aufweisen, und gegebenenfalls in der U-förmigen Aufnahme für zumindest eine anorganische Glasscheibe, insbesondere parallel zu den Stirnseiten der Glasscheibe, ebenfalls bei Hitzeeinwirkung sich expandierende, hitzebeständige Dichtungen aufweisen.

Durch ein oder zwei Schiebetüren ist ein besonders breiter und den Personendurchzug nicht behindernder Durchgang gewährleistet, wobei durch die Fixierung der Türen in der Geschlossenstellung durch beidseits der Türen angeordneten und an allen vier Seiten angeordneten Halterungen eine besonders sichere Halterung der Türe bzw. Türen in Geschlossenstellung erreicht werden kann. Durch die Kombination eines Metallkörpers, insbesondere Profiles, z. B. aus Aluminium, mit einer Verbundglasscheibe, kann die Glasfläche besonders groß gehalten sein. Mit den sich erst unter Hitzeeinwirkung expandierenden Dichtungen aus hitzebeständigem Material kann eine leichtgängige Konstruktion realisiert werden, wobei im Brandfalle die Türen im Durchgang durch die Hitzeeinwirkung gasdicht werden. Gleichzeitig kann eine elastische Lagerung des anorganischen Glases in der U-förmigen Aufnahme, die beispielsweise durch einen L-förmigen Schenkel und angeschraubten weiteren Schenkel erreicht wird, vorliegen, wobei im Brandfalle die expandierende Dichtung ebenfalls für eine Fixierung der Glasscheibe durch ein hitzebeständiges Material Sorge trägt. Als unter Hitzeeinwirkung sich expandierende Dichtung kann beispielsweise ein bei höheren Temperaturen noch beständiger Kunststoff, wie Polyimide, Polytetrafluorethylen od. dgl., vorgesehen sein, in welchem bei erhöhter Temperatur gasabspaltende Verbindungen, wie beispielsweise Diazzoverbindungen od. dgl., dienen können. Als gasbildende Stoffe können auch höhersiedende Kohlenwasserstoffe dienen, die bei niedrigeren Temperaturen im Kunststoff als Weichmacher dienen.

Ist die Schiebetüre an ihrer mit einer abgestuften Aufnahme kooperierenden Stirnseite abgestuft ausgebildet, so daß ein Falz mit einer in Bewegungsrichtung vorgelagerten und einer nachgelagerten Stirnfläche gebildet sein, wobei die Verbindungsfläche beider Stirnflächen in Richtung von oben nach unten eine durchgehende bei Hitzeeinwirkung sich expandierende hitzebeständige Dichtung aufweist, so ist eine labyrinthartige Dichtung gewährleistet, welche bereits bei kurzer Hitzeeinwirkung einen gasdichten Abschluß ermöglicht.

Eine besonders gute Abdichtung sowohl gegen durchtretende Luft im Normalfall als auch heißer Gase während eines Brandfalles ist dann gewährleistet, wenn die Aufnahme und die Stirnseite der Schiebetüre gegengleich ausgebildet sind.

Ist die Aufnahme an der Stirnseite einer weiteren Schiebetüre vorgesehen, so ist eine gegenseitige Fixierung der Schiebetüren im Brandfalle gegeben, so daß eine besonders gute Festlegung unter Verhinderung jeglicher weiterer Bewegung möglich wird.

Schließt die hitzebeständige, sich expandierende Dichtung mit der Verbindungsfläche zwischen den Stirnflächen bündig ab, so wird besonders einfach eine Zerstörung der Dichtung im Normalbetrieb vermieden, so daß eine besonders hohe Betriebssicherheit im Ernstfall gegeben ist.

Weist die nachgelagerte Stirnfläche eine U-förmige Ausnehmung für die vorgelagerte Stirnfläche der Aufnahme bzw. anderen Schiebetüre bzw. einer auf der Stirnfläche angeordneten gummielastischen Profil, z. B. Handschutz, auf, so ist im geschlossenen Zustand eine Verbundkonstruktion gegeben, die ein gegenseitiges Abstützen und Verstärken der Türen bzw. zur Aufnahme gewährleistet, wobei weiters durch den Schutzgummi Verletzungen beim automatischen Schließen der Türe auszuschließen sind.

Weist der Metallkörper, insbesondere die Profile, der Schiebetüren Hohlräume auf, die mit feuerbeständigen Fasern, Schaumstoff od. dgl. erfüllt sind, so ist eine verbindungssteife Konstruktion mit geringem Gewicht gegeben, wobei gleichzeitig die Wärmeleitung auf Grund der Profile von einer Türseite auf die andere Türseite wesentlich geringer ist, als beispielsweise bei einem Vollprofil, womit eine Weiterleitung der Wärme und damit der Brandgefahr besonders günstig entgegengewirkt wird.

Weist die Steuerung zur Betätigung der Schiebetüre(n) einen Thermoschalter auf, so kann erreicht werden, daß ab einer gewissen Temperatur die gesamte Steuerung abgeschaltet wird, um ein unwillkürliches Öffnen der Türe, wie beispielsweise durch herabfallende Gegenstände, die eine Simulation einer durchtretenwollenden Person darstellen, zu verhindern.

Sind die bei Hitzeeinwirkung expandierenden Dichtungen der Durchführung im Abstand vom Metallkörper der Schiebetüre angeordnet, so können jene Dichtungen, die zu einem Verklemmen der Schiebetüre auf Grund der relativ großen Fläche leichter führen, einfach vermieden werden, wobei eine vorzeitige Zerstörung der Dichtung ebenfalls vermieden wird.

Sind die bei Hitzeeinwirkung expandierenden Dichtungen der Querschienen im Abstand vom Metallkörper der Schiebetüre angeordnet, so sind auch diese Dichtungen von einer Zerstörung im normalen Betriebsfall ausgeschlossen.

Weist der Metallkörper der Schiebetüre eine sich in Bewegungsrichtung derselben und nach oben erstreckende Nut auf, in welche eine untere Schiene eingreift und daß gegebenenfalls in der Nut ein Gleitstück, z. B. U-förmiges Profil, aus Polytetrafluorethylen angeordnet ist, so ist auch im unteren Bereich der Schiebetüre eine Labyrinthdichtung gewährleistet, wobei an diese üblicherweise geringere Ansprüche gestellt werden, da im Normalfall die heißen Gase nach oben austreten und eine horizontale Fortpflanzung von Wärme in der Regel durch Strahlung und Wärmeleitung verursacht wird.

Mündet die Nut entlang der Schieberichtung in den Hohlraum der Schiebetüre, so ist eine besonders geringe Wärmeleitung in diesem Bereich des metallischen Körpers der Schiebetüre gewährleistet.

Weist der Durchgang entlang der unteren Schienen und entlang der unteren Stirnfläche des Metallkörpers der Schiebetüre bei Hitzeeinwirkung sich expandierende Dichtungen auf, so ist selbst in diesem Bereich eine weitere zusätzliche Abdichtung vorgesehen, die beispielsweise bei brandgefährdeten Bodenbelägen von besonderem Interesse sein kann.

Ist die elastische Dichtung für die anorganische Glasscheibe in der U-förmigen Aufnahme mit einem flammhemmenden Silikonkautschuk aufgebaut, so ist im Brandfalle eine besonders lange elastische Lagerung der Glasscheibe gewährleistet, wobei weiters keine zusätzliche Brandgefahr vom elastischen Werkstoff verursacht wird.

Im folgenden wird die Erfindung anhand der Zeichnungen näher erläutert.

Es zeigen:
Fig. 1 einen schematischen Längsschnitt durch einen Durchgang mit Schiebetüre und
Fig. 2 einen Querschnitt eines Durchganges mit Schiebetüre.

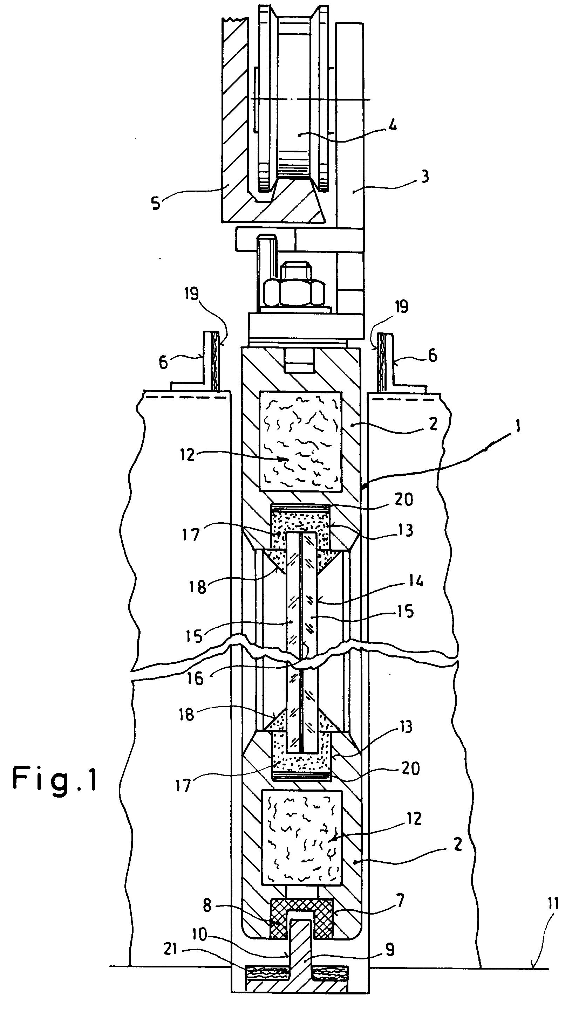

Die in Fig. 1 im Schnitt dargestellte Schiebetüre 1 weist einen Metallkörper aus Aluminiumprofilen 2 auf und ist über einen Wagen 3 mit Rolle 4 auf einer Schiene 5, die am Waggon befestigt ist, querverschieblich angeordnet. Das obere Metallprofil weist Querschienen 6, die sich über den gesamten Bereich des Durchganges erstrecken.

Im unteren Bereich der Türe weist das Profil 2 eine Nut 7 auf, in welcher ein U-förmiges Gleitstück 8 aus Polytetrafluorethylen angeordnet ist. Dieses Gleitstück kooperiert mit der unteren Schiene 9, deren Steg 10 oberhalb des Bodenniveaus 11 abschneidet. Die Profile 2 weisen einen Hohlraum 12 auf, welcher im unteren Profil sich zur Nut 7 öffnet. Durch die Profile ist weiters eine U-förmige Aufnahme 13 vorgesehen. Diese U-förmigen Aufnahmen können auch durch eine Ausnehmung im Profil gemeinsam mit einer Abdeckleiste, die lösbar mit dem Profil verbunden ist, aufgebaut sein, wobei dann die Montage der Glasscheibe 14 sich besonders einfach gestaltet. Die Glasscheibe 14 besteht aus zwei anorganischen Glasscheiben 15, welche über eine Kunststoffolie 16 miteinander verbunden sind. Diese Verbundglasscheibe ist über eine elastische Dichtung 17 aus flammhemmendem Silikonkautschuk in der Nut gehalten. Eine weitere Abdichtung ist durch die im Querschnitt dreieckförmige Silikonabdeckung 18 gegeben, welche im Normalbetrieb Staub, Kondenswasser u. dgl. von der U-förmigen Aufnahme ableitet.

Die Querschienen 6 weisen entlang ihrer zum Türprofil weisenden Flächen Dichtungen 19 auf, die aus hitzebeständigem Material bestehen und sich bei Hitzeeinwirkung expandieren. Die Dichtungen 19 sind im Abstand zum Profil 2 angeordnet, so daß im Normalbetrieb die Dichtungen 19 nicht in Anlage an das Profil 2 kommen. Am Grund der U-förmigen Aufnahme 13 für die Glasscheibe 14 ist ebenfalls umlaufend eine Dichtung 20 aus hitzebeständigem, sich bei Hitzeeinwirkung expandierendem, Material vorgesehen. Auch die untere Schienen, die in die Nut 7 der Türe eingreift, weist beidseitig ihres Steges 10 entlanglaufende, ebenfalls hitzebeständige, unter Einwirkung von Hitze sich expandierende, Dichtungen 21 auf. Der Hohlraum 12 der Profile 2 kann, wie in der Fig. dargestellt, mit hitzebeständigen Fasern oder Schaumstoff, z. B. aus anorganischen Materialien, gefüllt oder auch ausgeschäumt sein.

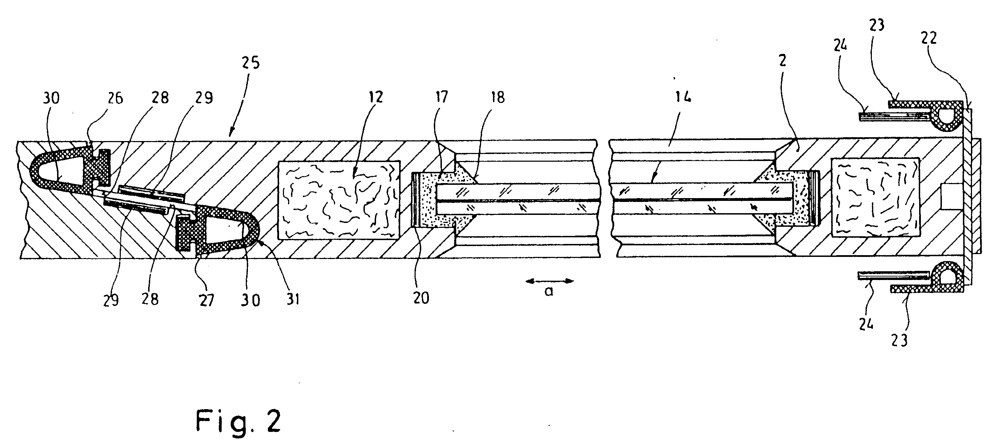

In Fig. 2 ist die Schiebetüre gemäß Fig. 1 im Querschnitt dargestellt, wobei die Türe einen Anschlag 22 aufweist, der bei Geschlossenstellung der Türe an der Durchführung 23 zur Anlage kommt. Die Durchführung 23 trägt ihrerseits wieder Dichtungen 24 aus hitzebeständigem, unter Hitzeeinwirkung expandierende Material auf, die entlang und im Abstand vom Aluminiumprofil 2 angeordnet sind. Die Schiebetüre weist ein Profil 25 mit einer abgestuften Stirnseite auf, die im dargestellten Fall mit einer gegengleich ausgebildeten Stirnseite einer weiteren Schiebetüre kooperiert. Anstelle einer weiteren Schiebetüre kann auch eine entsprechend ausgebildete Aufnahme vorgesehen sein. Das Profil 25 weist eine vorgelagerte Stirnfläche 26 und eine nachgelagerte Stirnfläche 27 auf. Zwischen den beiden Stirnflächen ist eine geneigt zur Bewegungsrichtung a orientierte Verbindungsfläche 28 vorgesehen. In dieser Fläche ist eine Ausnehmung, in welcher ebenfalls Dichtungen 29 angeordnet sind, die aus einem hitzebeständigen, bei Hitzeeinwirkung sich expandierendem Material bestehen. Diese Dichtungen schließen bündig mit der Verbindungsfläche 28 ab und sind ebenfalls im Abstand zueinander angeordnet. Die vorgelagerte Stirnfläche 26 weist ein gummielastisches Profil 30 auf, das in eine entsprechend geformte Nut 31 in die nachgelagerte Stirnfläche 27 eingreift. Das Gummiprofil 30 als auch die Dichtung 29 und die Nut 31 erstrecken sich über die gesamte Höhe der Türe, so daß ein vollkommener Verletzungsschutz bei der Kante gegeben ist.

Ein derartiger Durchgang mit Schiebetüre(n) kann im Stirnbereich eines Waggons als Durchtrittstüre angeordnet sein, jedoch ist die Konstruktion so einfach gehalten, daß selbst der Eintritt zu Eisenbahnabteilen mit derartigen Durchgängen verschlossen werden kann. Bei der Anordnung als Durchtrittstüre, wie sie beispielsweise im Personennahverkehr mit einem besonders breiten Durchtritt erforderlich sind, kann die Öffnungs- und Schließbewegung über eine eigene Steuerung erfolgen. Derartige Steuerungen verfügen üblicherweise über fotoelektrische Sensoren, die die Öffnung der Türen bei Näherung von Personen einleitet. Um im Brandfalle ein unerwünschtes Öffnen der Türen zu vermeiden, kann über einen Thermoschalter bei überschreiten einer bestimmten Temperatur, beispielsweise 70° C, die gesamte Steuerung abgeschaltet werden.

Kommt es nun zur Hitzeeinwirkung, wie beispielsweise bei einem Brand, so expandieren die Dichtungen 19, 20, 21, 24 und 29, die vorzugsweise jeweils entlang der gesamten zur Schiebetüre weisenden Fläche vorgesehen sind. Spalten, die durch die expandierenden Dichtungen abgedeckt werden können, sind möglich. Damit ist jeglicher Durchtritt von Gasen durch die Türe, da die Dichtungen am Metallkörper anliegen, sicher verhindert. Eine Beschädigung der Dichtungen im Normalbetrtieb ist, da diese im Normalbetrieb im Abstand zum Metallkörper angeordnet sind, sicher vermieden.

Bei Hitzeeinwirkung kommt es zur langsamen Zerstörung des Silikonkautschuks 17, wobei gleichzeitig die umlaufend um die Glasscheibe angeordnete Dichtung 20 expandiert und so weiterhin für einen sicheren Abschluß der Glasscheibe innerhalb des Metallkörpers der Türe Sorge trägt.

Ausführliche Untersuchungen entsprechend dem britischen Standard BS 476, Part 20/1987 und British Standard BS 476, Part 22/1987 haben ergeben, daß nach zwei Minuten Brenndauer auf der Kaltseite ein geringer Rauchgasaustritt nicht entzündbarer Gase eintritt. Nach acht Minuten hängen die Antriebselemente (Schlauchleitungen und Schalter) teilweise zur Feuerseite hin herab, und es tropft brennende Flüssigkeit ab. Es kommt aber zu keiner Raumbewegung der Türe. Offensichtlich sind die Dichtungen bereits so weit expandiert, daß ein voller Reibungsschluß gegeben ist, wobei insbesondere die Stirnseiten der aneinander schließenden Türen eine vollkommene Verankerung gewährleisten. Nach dreizehn Minuten tritt eine Eintrübung der Glasfelder ein. Nach fünfzehn Minuten wird mit einem Wattebausch auf der Kaltseite der Türe ein Entzündungsversuch durchgeführt. Es tritt keine Entzündung ein. Die Rauchentwicklung auf der Heißseite hat in der sechzehnten Minute bereits deutlich zugenommen, wohingegen in der siebzehnten Minute ein Entzündungsversuch mit offener Zündquelle erneut erfolglos verläuft. In der neunzehnten Minute tritt eine Verfärbung der Silikonoberfläche im Verglasungsbereich bei gleichzeitiger geringfügiger Expansion auf. In der einundzwanzigsten Minute können die austretenden Gase mit einem Wattebausch nicht, jedoch mit einer offenen Zündquelle zur Entzündung gebracht werden. In der achtundzwanzigsten Minute zerfällt eines der Glasfelder und es kommt zu einem offenen Flammendurchtritt aus der Brandkammer. Entsprechend den angeführten Versuchsbedingungen ist die raumabschließende Wirkung der beschriebenen Konstruktion über einundzwanzig Minuten gewährleistet, so daß hier eine hervorragende brandsichere Konstruktion eines Durchganges gegeben ist.

Die Dichtungen aus hitzebeständigem, sich unter Hitzeeinwirkung expandierendem Material können mit Kunststoffen, z. B. Polytetrafluorethylen, Polyimide od. dgl., brandsichere Stoffe aufgebaut sein, die bei erhöhter Temperatur eine gewisse Plastizität bzw. Elastizität aufweisen und die in sich eingeschlosse bei höheren Temperaturen, wie beispielsweise 150° C bis 280° C, Gas abspalten, wie Diazzoverbindungen, aber es sind auch Füllstoffe, z. B. Weichmacher, wie höhersiedende Kohlenwasserstoffe im Kunststoff anordenbar, die bei Erreichen dieser Temperatur zur Expansion der Dichtungen führen.

## Patentansprüche

1. Durchgang eines Waggons des schienengebundenen Personenverkehrs mit zumindest einer, insbesondere zwei, Schiebetüre(n) (1), welche über obere (5) und untere Schienen (9) querverschieblich von einer Offen- in eine Geschlossenstellung, gegebenenfalls mit einer Steuerung, bewegbar ist(sind), wobei die Schiebetüre(n) (1) mit einem Metallkörper, z. B. aus Profilen (2, 25), aufgebaut ist (sind), wobei gegebenenfalls zumindest eine anorganische Glasscheibe, z. B. Verbundglasscheibe (14), über eine elastische Dichtung (17) in einer U-förmigen Aufnahme (13) gehalten ist(sind), und der Metallkörper in Geschlossenstellung der Schiebetüre an seinem einen Endbereich in einer Durchführung (23) und am anderen Endbereich an einer Aufnahme und in seinem oberen Stirnbereich zwischen beidseitig derselben vorgesehenen Querschienen (6) angeordnet ist, dadurch gekennzeichnet, daß die Durchführung (23), insbesondere beidseitig, und die sich an beiden Seiten der Schiebetür befindlichen Querschienen (6) an ihren zu dem Metallkörper weisenden Flächen sich entlang des Metallkörpers erstreckende, bei Hitzeeinwirkung sich expandierende, hitzebeständige Dichtungen (19, 24) aufweisen und gegebenenfalls in der U-förmigen Aufnahme (13) für zumindest eine anorganische Glasscheibe (14), insbesondere parallel zu den Stirnseiten der Glasscheibe, ebenfalls bei Hitzeeinwirkung sich expandierende, hitzebeständige Dichtungen (20) aufweisen.

2. Durchgang nach Anspruch 1, dadurch gekennzeichnet, daß die Schiebetüre (1) an ihrer mit einer abgestuften Aufnahme kooperierenden Stirnseite abgestuft ausgebildet ist, so daß ein Falz mit einer in Bewegungsrichtung (a) vorgelagerten (26) und einer nachgelagerten Stirnfläche (27) gebildet ist, wobei die Verbindungsfläche (28) beider Stirnflächen (26, 27) in Richtung von oben nach unten eine durchgehende, bei Hitzeeinwirkung sich expandierende, hitzebeständige Dichtung (29) aufweist.

3. Durchgang nach Anspruch 2, dadurch gekennzeichnet, daß die Aufnahme und die Stirnseite der Schiebetüre (1) gegengleich ausgebildet sind (Fig. 2).

4. Durchgang nach Anspruch 1, 2 oder 3, dadurch gekennzeichnet, daß die Aufnahme an der Stirnseite einer weiteren Schiebetüre (1) vorgesehen ist (Fig. 2).

5. Durchgang nach Anspruch 2, 3 oder 4, dadurch gekennzeichnet, daß die hitzebeständige(n) Dichtung(en) (29) mit der Verbindungsfläche (28) zwischen den Stirnflächen (26, 27) bündig abschließt.

6. Durchgang nach einem der Ansprüche 2 bis 5, dadurch gekennzeichnet, daß die nachgelagerte Stirnfläche (27) eine U-förmige Nut (31) für die vorgelagerte Stirnfläche (26) der Aufnahme bzw. anderen Schiebetüre (1) bzw. ein auf der Stirnfläche angeordnetes gummielastisches Profil (30), z. B. Handschutz, aufweist.

7. Durchgang nach einem der Ansprüche 1 bis 6, dadurch gekennzeichnet, daß der Metallkörper, insbesondere die Profile (2, 25), der Schiebetüre Hohlräume (12) aufweist, die mit feuerbeständigen Fasern, Schaumstoffen od. dgl. erfüllt sind.

8. Durchgang nach einem der Ansprüche 1 bis 7, dadurch gekennzeichnet, daß die Steuerung zur Betätigung der Schiebetüre einen Thermoschalter aufweist.

9. Durchgang nach einem der Ansprüche 1 bis 8, dadurch gekennzeichnet, daß die bei Hitzeeinwirkung expandierenden Dichtungen (24) der Durchführung (23) im Abstand vom Metallkörper der Schiebetüre (1) angeordnet sind.

10. Durchgang nach einem der Ansprüche 1 bis 9, dadurch gekennzeichnet, daß die bei Hitzeeinwirkung expandierenden Dichtungen (19) der Querschienen (6) im Abstand vom Metallkörper der Schiebetüre (1) angeordnet sind.

11. Durchgang nach einem der Ansprüche 1 bis 10, dadurch gekennzeichnet, daß der Metallkörper der Schiebetüre (1) eine sich in Bewegungsrichtung (a) und nach oben derselben erstreckende Nut (7) aufweist, in welche eine untere Schiene (9) eingreift und daß gegebenenfalls in der Nut (7) ein Gleitstück (8), z. B. U-förmiges Profil, aus Polytetrafluorethylen od. dgl. angeordnet ist.

12. Durchgang nach Anspruch 11, dadurch gekennzeichnet, daß die Nut (7) entlang der Schieberichtung (a) der Schiebetüre in den Hohlraum (12) der Schiebetüre (1) mündet.

13. Durchgang nach einem der Ansprüche 1 bis 12, dadurch gekennzeichnet, daß entlang der unteren Schiene (9) und entlang der unteren Stirnfläche des Metallkörpers der Schiebetüre (1) hitzebeständige, sich bei Hitzeeinwirkung expandierende, Dichtungen (21) aufweist.

14. Durchgang nach einem der Ansprüche 1 bis 13, dadurch gekennzeichnet, daß die elastische Dichtung in der U-förmigen Aufnahme (13) für die Glasscheibe (14) mit flammhemmendem Silikonkautschuk (17) aufgebaut ist.

## Claims

1. Connecting passage of a carriage used in railborne passenger transport, having at least one, particularly two, sliding door(s) (1), which can be moved in a transversely displaceable manner by means of upper (5) and lower rails (9) from an open into a closed position, where appropriate by use of a control system, the sliding door(s) (1) being constructed with a metal body, e.g. consisting of profiles (2, 25), where appropriate at least one inorganic glass pane, e.g. laminated glass pane (14), being held by means of an elastic seal (17) in a U-shaped receiving fixture (13) and the metal body, in the closed position of the sliding door, being disposed at its one end region in a bushing (23) and at the other end region on a receiving fixture and in its upper end region between cross-rails (6) provided on both sides of the sliding door, characterized in that the bushing (23), particularly on both sides, and the cross-rails (6) located on both sides of the sliding door have, on their faces pointing towards the metal body, heat-resistant seals (19, 24), which extend along the metal body and expand under the influence of heat, and have, where appropriate, in the U-shaped receiving fixture (13) for at least one inorganic glass pane (14), particularly parallel to the end sides of the glass pane, heat-resistant seals (20), which likewise expand under the influence of heat.

2. Connecting passage according to Claim 1, characterized in that the sliding door (1), on its end side cooperating with a stepped receiving fixture, is of stepped configuration, so that a fold is formed having an anterior end face (26) and a posterior end face (27) in the motional direction (a), the connecting face (28) of the two end faces (26, 27) having in the direction from top to bottom a continuous, heat-resistant seal (29), which expands under the influence of heat.

3. Connecting passage according to Claim 2, characterized in that the receiving fixture and the end side of the sliding door (1) are of diametrically opposed configuration (Fig. 2).

4. Connecting passage according to Claim 1, 2 or 3, characterized in that the receiving fixture is provided on the end side of a further sliding door (1) (Fig. 2).

5. Connecting passage according to Claim 2, 3 or 4, characterized in that the heat-resistant seal or seals (29) terminates or terminate flush with the connecting face (28) between the end faces (26, 27).

6. Connecting passage according to one of Claims 2 to 5, characterized in that the posterior end face (27) has a U-shaped groove (31) for the anterior end face (26) of the receiving fixture or of the other sliding door (1) or has an elastomeric profile (30), e.g. hand-guard, disposed on the end face.

7. Connecting passage according to one of Claims 1 to 6, characterized in that the metal body, particularly the profiles (2, 25), of the sliding door has cavities (12), which are filled with fire-resistant fibres, foam materials or the like.

8. Connecting passage according to one of Claims 1 to 7, characterized in that the control system for the actuation of the sliding door has a thermal circuit-breaker.

9. Connecting passage according to one of Claims 1 to 8, characterized in that the seals (24) of the bushing (23), which seals expand under the influence of heat, are disposed at a distance from the metal body of the sliding door (1).

10. Connecting passage according to one of Claims 1 to 9, characterized in that the seals (19) of the cross-rails (6), which seals expand under the influence of heat, are disposed at a distance from the metal body of the sliding door (1).

11. Connecting passage according to one of Claims 1 to 10, characterized in that the metal body of the sliding door (1) has a groove (7) which extends in the motional direction (a) of the sliding door and upwards and in which there engages a lower rail (9), and in that, where appropriate, a slide block (8), e.g. a U-shaped profile, made from polytetrafluoroethylene or the like is disposed in the groove (7).

12. Connecting passage according to Claim 11, characterized in that the groove (7), along the sliding direction (a) of the sliding door, opens into the cavity (12) in the sliding door (1).

13. Connecting passage according to one of Claims 1 to 12, characterized in that it has seals (21) along the lower rail (9) and along the lower end face of the metal body of the sliding door (1), which seals are heat-resistant and expand under the influence of heat.

14. Connecting passage according to one of Claims 1 to 13, characterized in that the elastic seal in the U-shaped receiving fixture (13) for the glass pane (14) is constructed with flame-retarding silicone rubber (17).

## Revendications

1. Passage pour une voiture de transport ferroviaire de personnes comportant au moins une, notamment deux porte(s) coulissante(s) (1) qui peuvent être déplacée(s) par coulissement transversal sur des rails supérieur (5) et inférieur (9), éventuellement avec un moyen de commande, d'une position ouverte dans une position fermée, la (les) porte(s) coulissante(s) (1) étant constituée(s) avec d'un corps métallique, par exemple formé de profilés (2, 25), le cas échéant au moins une vitre en verte inorganique, par exemple une vitre composite (14), étant tenue dans un logement (13) en U par l'intermédiaire d'un joint (17) élastique et, lorsque la porte coulissante est en position fermée, le corps métallique étant disposé dans l'une des ses régions d'extrémité dans un élément de traversée (23), dans l'autre région d'extrémité dans un élément de réception et dans sa surface extérieure entre deux rails (6) transversaux prévus de part et d'autre de ladite porte, caractérisé par le fait que l'élément de traversée (23), de préférence des deux côtés, et les deux rails transversaux (6) prévus de part et d'autre de la porte coulissante sont pourvus sur leur surface tournée vers le corps métallique, de joints (19, 24) résistants à la chaleur qui s'étendent le long du corps métallique et gonflent sous l'action de la chaleur et que le cas échéant des joints (20) résistants à la chaleur, qui gonflent sous l'action de la chaleur, sont disposés dans le logement (13) en U pour au moins une vitre (14) en verre inorganique, en particulier parallèlement aux faces frontales de la vitre.

2. Passage selon la revendication 1, caractérisé par le fait que la face frontale de la porte coulissante (1) coopérant avec un élément de réception étagé est étagée de telle sorte qu'une feuillure avec une surface frontale (26) avant dans la direction de déplacement (a) et une surface frontale arrière (27) est formée, la surface de liaison (28) entre les deux surfaces frontales (26, 27) comportant, dans la direction de haut en bas, un joint (29)continu résistant à la chaleur qui gonfle sous l'action de la chaleur.

3. Passage selon la revendication 2, caractérisé par le fait que l'élément de réception et la face frontale de la porte coulissante (1) ont des formes semblables complémentaires (fig. 2).

4. Passage selon la revendication 1, 2 ou 3, caractérisé par le fait que l'élément de réception est prévu sur la surface frontale d'une porte coulissante (1) supplémentaire.

5. Passage selon la revendication 2, 3 ou 4, caractérisé par le fait que le(s) joint(s) (29) résistant(s) à la chaleur se raccorde(nt) à franc-bord à la surface de liaison (28) entre les surfaces frontales (26, 27).

6. Passage selon l'une des revendications 2 à 5, caractérisé par le fait que la surface frontale (27) arrière comporte une rainure (31) en U pour la surface frontale (26) avant de l'élément de réception ou de l'autre porte coulissante (1) ou pour un profilé (30) élastique en caoutchouc, par exemple un pare-mains, disposé sur la surface frontale.

7. Passage selon l'une des revendications 1 à 6, caractérisé par le fait que le corps métallique, en particulier les profilés (2, 25), des portes coulissantes, présentent des cavités (12) qui sont remplies de fibres, de mousses ou de matériaux similaires résistant au feu.

8. Passage selon l'une des revendications 1 à 7, caractérisé par le fait que la commande pour l'actionnement des portes coulissantes (1) comporte un contacteur thermostatique.

9. Passage selon l'une des revendications 1 à 8, caractérisé par le fait que les joints (24) gonflant sous l'action de la chaleur associés à l'élément de traversée (23) sont disposés à distance du corps métallique de la porte coulissante (1).

10. Passage selon l'une des revendications 1 à 9, caractérisé par le fait que les joints (19) gonflant sous l'action de la chaleur associés aux rails transversaux (6) sont disposés à distance du corps métallique de la porte coulissante (1).

11. Passage selon l'une des revendications 1 à 10, caractérisé par le fait que le corps métallique de la porte coulissante (1) présente une rainure (7) qui s'étend dans la direction de déplacement (a) de la porte coulissante (1) et vers le haut et dans laquelle pénètre un rail (9) inférieur et par le fait qu'éventuellement un élément de glissement (8), par exemple un profilé en U en poly (tétrafluoroéthylène) ou en un matériau similaire, est disposé dans la rainure (7).

12. Passage selon la revendication 11, caractérisé par le fait que la rainure (7) disposée dans la direction de déplacement (a) de la porte coulissante débouche dans la cavité (12) de ladite porte coulissante (1).

13. Passage selon l'une des revendications 1 à 12, caractérisé par le fait qu'il est prévu, le long du rail (9) inférieur et le long de la surface frontale inférieure du corps métallique de la porte coulissante (1), des joints (21) résistants à la chaleur qui gonflent sous l'action de la chaleur.

14. Passage selon l'une des revendications 1 à 13, caractérisé par le fait que le joint élastique placé dans le logement (13) en U pour la vitre (14) est en caoutchouc de silicone (17) ne propageant pas la flamme.
